# FASCICULE DE BREVET EUROPEEN

(11) **EP 1 661 650 B1**
(45) Date de publication et mention de la délivrance du brevet: **28.01.2009**
(21) Numéro de dépôt: 04405744.6
(22) Date de dépôt: 30.11.2004
(51) Int. Cl.: B23B 29/24

(54) **Support d'outils**
Werkzeughalter
Tool holder

(43) Date de publication de la demande: 31.05.2006
(73) Titulaire: Applitec Moutier S.A., 2740 Moutier (CH)
(72) Inventeur: Champion, François, 2740 Moutier (CH); Schaller, Vincent, 2742 Perrefitte (CH)
(74) Mandataire: GLN

(56) Documents cités:
- EP-A- 1 240 961
- EP-A- 1 260 295
- FR-A- 1 401 790
- US-A- 2 900 704
- US-A- 3 126 611
- US-A- 3 741 049

## Description

### Domaine technique

La présente invention se rapporte au domaine de la machine-outil et plus particulièrement, aux supports destinés à recevoir des outils, notamment susceptibles d'équiper des tours automatiques plus connus sous le nom de décolleteuses. De tels supports permettent de disposer plusieurs outils sur une machine. Chaque outil présente un corps également appelé porte-plaquette, sur lequel est monté un outil, tel une plaquette de coupe, généralement en matériau fritté. Dans la présente description, le terme de porte-plaquette englobera également certains outils dans lesquels l'arête de coupe est venue d'une pièce avec le corps disposé sur le support. Un ensemble selon le préambule de la revendication 1 est connus de US 2 900 704.

### Etat de la technique

Le fait de disposer plusieurs outils sur un même support permet de travailler de manière efficace et rapide, même avec des pièces compliquées. Il est, de plus, possible de réaliser un préréglage des outils avant la mise en place du support sur la machine, ce qui permet un gain de temps important.

Pour assurer une rigidité optimale, la Société Citizen (Japon) réalise des supports munis de rainures dont une face est inclinée et dans lesquelles les outils sont fixés et serrés au moyen d'une pièce en V. Les outils sont ainsi parfaitement solidarisés au support, mais ils occupent beaucoup de place, à cause de la présence de la pièce de serrage. De la sorte, le nombre de porte-outils pouvant être utilisé est relativement limité.

La Société BIMU (Suisse) commercialise, sous l'appellation de « Tecko TTS », des supports sur lesquels les outils peuvent être contigus. Ils sont fixés au moyen de deux vis sur une surface plane. La rigidité de l'ensemble est assurée par la grande section de chacun des outils. Cela occupe également un espace considérable, pour un progrès minime.

Le document US 2,900,704 divulgue un autre mode de réalisation dans lequel une structuration du contact entre le porte-plaquette et le support est proposée, améliorant les conditions de travail de l'ensemble ainsi formé.

Le but de la présente invention est de proposer, en alternative, un ensemble comportant un support et des outils, garantissant ensemble un maximum de rigidité pour un encombrement minimum et dont le réglage de la position de l'outil est simplifié.

### Divulgation de l'invention

De façon plus précise, l'invention concerne un ensemble destiné à équiper une machine-outil et comportant :
- un support muni d'une surface d'appui comportant des rainures longitudinales,
- au moins un outil destiné à être fixé rigidement sur le support et qui présente un corps de forme générale parallélépipédique oblongue définissant un axe AA longitudinal, dont une première extrémité est destinée à assurer une fonction de porte-plaquette ou d'outil et dont un côté comprend des bossages longitudinaux conformés de manière à pouvoir être engagés dans les rainures,
- des moyens de fixation agencés pour assurer le maintien rigide de l'outil sur le support.

Selon l'invention, le support présente une gorge définie par un rehaut perpendiculaire à l'axe AA et par une paroi que comporte le support. Le rehaut est destiné à coopérer avec une deuxième extrémité de l'outil pour assurer son positionnement, ladite deuxième extrémité de l'outil étant constituée par une vis disposée dans un taraudage d'axe AA. En outre, la vis comporte une tête agencée pour coopérer avec le rehaut.

Le support peut également présenter une gorge définie par le rehaut et par une paroi que comporte le support, la tête de la vis étant disposée dans la gorge. La paroi comporte, de préférence, une bille à ressort agencée pour appuyer la tête de la vis contre le rehaut.

Ainsi, l'ensemble selon l'invention permet de minimiser les risques de dommages que peut causer une contrainte frontale excessive. En effet, l'appui se faisant, au niveau de l'outil, sur une face dirigée du côté de l'arête de coupe, l'outil peut subir un certain recul, particulièrement dans le cas où il est positionné par une bille à ressort.

L'ensemble selon l'invention peut encore présenter l'une et/ou l'autre des caractéristiques suivantes:
- les rainures et les bossages sont de section triangulaire ou trapézoïdale, présentant un angle au sommet compris entre 60° et 120°;
- l'outil est muni de deux trous le traversant de part en part et débouchant dans son côté coopérant avec la surface d'appui et le support comprend deux trous taraudés débouchant dans sa surface d'appui, les moyens de fixation comportant deux vis engagées dans les trous de l'outil et vissées dans les trous du support;
- les trous que comporte l'outil sont oblongs et orientés selon l'axe AA.

### Brève description des dessins

L'invention sera mieux comprise à la lecture de la description qui va suivre, donnée à titre d'exemple et faite en référence au dessin dans lequel :
- la figure 1 représente un ensemble selon l'invention, dont des parties sont illustrées de manière plus détaillée sur les figures 2, 2a et 2b, les figures 2a et 2b étant des vues en coupes selon des plans perpendiculaires au dessin et passant respectivement par les axes AA et BB de la figure 2 ;
- les figures 3 et 4 montrent deux autres modes de réalisation de supports, parties de l'ensemble selon l'invention, et
- les figures 5 et 6 représentent deux outils destinés à être fixés sur l'un ou l'autre des supports illustrés aux figures 1 à 4.

### Mode(s) de réalisation de l'invention

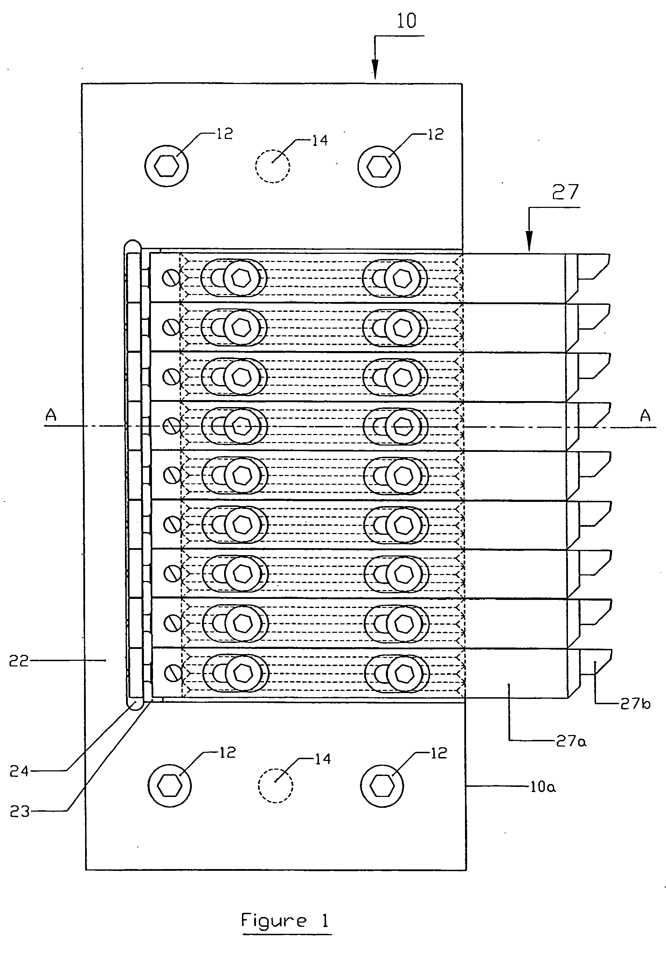

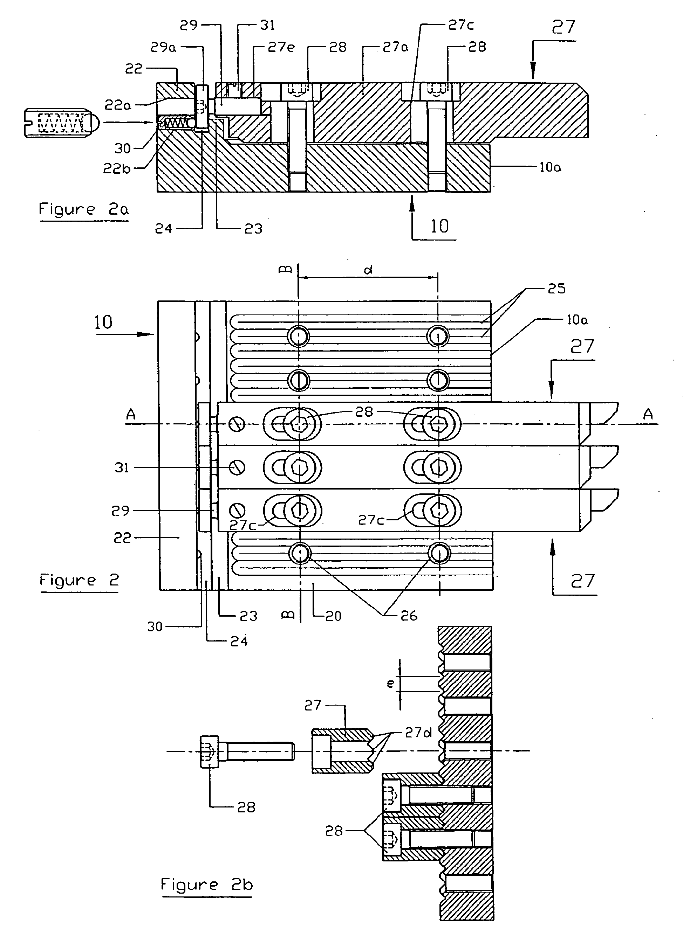

L'ensemble représenté aux figures 1 et 2 comporte un support 10 destiné à être monté sur un chariot de machine-outil, tel qu'un tour automatique appelé communément décolleteuse. Ce support 10 est formé d'une plaque en fonte munie de quatre trous, apparents seulement sur la figure 1, dans lesquels sont engagées des vis 12, serrées dans des trous taraudés du chariot, et de deux trous de positionnement dans lesquels sont logées des goupilles de positionnement 14 destinées à être engagées dans des trous correspondants que comporte le chariot, pour y assurer le positionnement du support 10.

La portion centrale du support 10 présente une creusure de forme générale rectangulaire définissant une surface d'appui 20, mieux apparente sur la figure 2, ouverte sur sa face avant 10a. Le côté opposé est formé d'une paroi 22 au voisinage de laquelle se trouve un rehaut 23 parallèle à cette paroi 22 et séparée de celle-ci par une gorge 24.

La surface 20 est sillonnée de rainures 25, orientées parallèlement à un axe AA lequel est perpendiculaire à la face 10a, à la paroi 22, au rehaut 23 et à la gorge 24. Ces rainures 25 sont distantes d'une valeur e, typiquement égale à 4mm.

Le support 10 est, en outre, percé de deux rangées de trous taraudés 26 (figure 2) débouchant dans la surface 20 et disposés selon des lignes perpendiculaires à l'axe AA et parallèles au côté 10a, séparées l'une de l'autre d'une distance d, typiquement égale à 40mm.

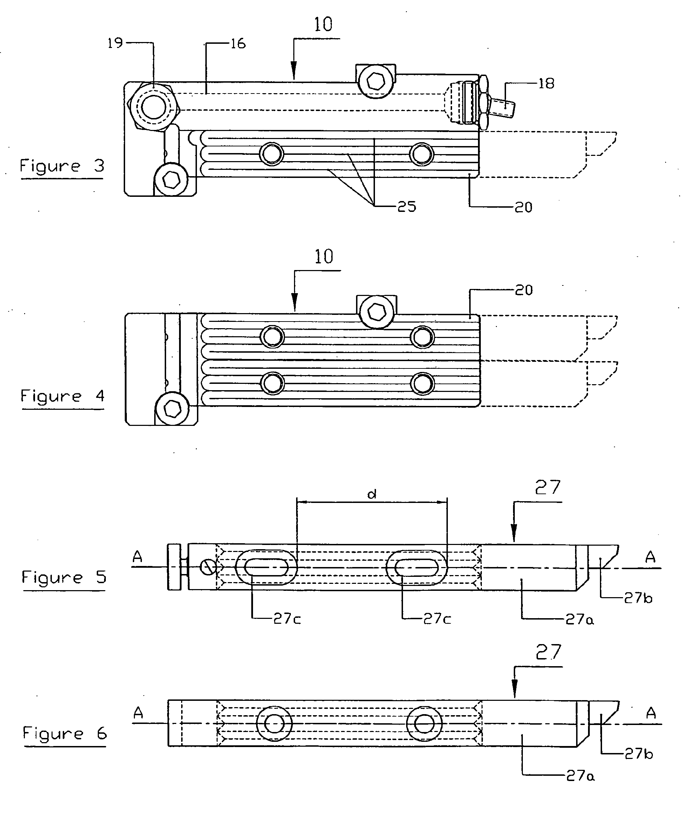

La surface 20 porte des outils 27, neuf d'entre eux étant représentés sur la figure 1. Chaque outil 27 est formé, comme on peut le voir sur les figures 5 et 6, d'un porte-plaquette 27a, généralement en acier, et d'une plaquette 27b, généralement en matériau fritté. L'assemblage de la plaquette 27b sur le porte-plaquette 27a peut-être de n'importe quel type connu. Il ne sera donc pas décrit de manière plus détaillée ici. Le porte-plaquette 27a est de forme générale parallélépipédique, son long côté définissant l'orientation de l'axe AA.

Dans le mode de réalisation de la figure 5, le porte-plaquette 27a est percé de deux trous oblongs 27c distants l'un de l'autre d'une valeur égale à d et destinés à recevoir des vis 28 fixées dans les trous taraudés 26 du support 10.

La face du porte-plaquette 27a attenante au support 10 est formée de trois bossages 27d, mieux visibles sur la figure 2b où l'un des outils 27 est séparé du support 10. Les bossages sont agencés de manière à être engagés dans les rainures 25 et à prendre appui contre leurs parois. Le pas entre les bossages 27d est donc aussi égal à e. Leur section est trapézoïdale et celle des rainures 25, triangulaire avec des angles au sommet identiques, typiquement de 90°. Ainsi, chaque bossage est parfaitement engagé dans la gorge à laquelle il est associé, sans risque que son sommet du bossage vienne buter dans le fond de la gorge.

L'extrémité du porte-plaquette 27a opposée à celle munie de la plaquette 27b est percée d'un trou taraudé 27e (figure 2a) dans lequel une vis 29 est montée tournante. La vis 29 constitue ainsi l'extrémité du l'outil. Sa tête 29a est logée dans la gorge 24 et prend appui contre le rehaut 23 formant butée. Par ailleurs, la paroi 22 est percée de trous 22a (figure 2a) alignés sur les axes des vis 29, de manière à pouvoir accéder aux têtes 29a pour les tourner, et de trous 22b dans lesquels sont logées des billes à ressort 30. De la sorte, les têtes 29a sont maintenues en appui contre le rehaut 23 par les billes à ressort 30. En tournant les vis 29 par engagement d'une clé dans le trou 22a et la tête 29a, le porte-plaquette 27a se déplace selon une direction parallèle à l'axe AA, dans un sens ou dans l'autre selon le sens de rotation. De manière avantageuse, la vis 29 peut être bloquée au moyen d'une petite vis en nylon 31 disposée dans le porte-plaquette 27a perpendiculairement à la vis 29.

La figure 3 montre un support 10 spécialement aménagé pour disposer d'un arrosage optimum de la plaquette de coupe. Il comprend une surface d'appui 20 ne permettant de recevoir qu'un porte-plaquette. Le support 10 est percé d'un canal 16 comportant une buse 18 à une extrémité et un embout 19 à l'autre.

L'embout 19 est destiné à recevoir un tuyau relié à un réservoir dans lequel est stocké un liquide de refroidissement. La buse 18 est destinée à assurer la projection de ce liquide sur l'outil 27 et sur la pièce en cours d'usinage, pour assurer leur refroidissement.

La surface d'appui 20 est également munie de rainures 25, en quantité suffisante pour recevoir un outil 27. Dans cette disposition, la buse 18 se trouve donc parfaitement orientée au-dessus de la plaquette d'usinage 27b, qui peut ainsi être arrosée dans les meilleures conditions possibles.

Dans le mode de réalisation de la figure 4, la creusure 20 s'étend sur toute la largeur du support 10. Ses dimensions sont telles qu'elle peut recevoir deux outils disposés en parallèle. Selon le type de machine, plusieurs de ces supports peuvent être placés côte à côte. Dans ce cas, le système d'arrosage devra être indépendant.

Les supports représentés sur les figures 3 et 4 peuvent, sans autre adaptation, être disposés directement sur le chariot ou sur une plaque de base, elle-même montée sur le chariot.

Si l'on se réfère à la figure 6, on constate que le porte-plaquette 27a peut ne pas comporter de moyen de calage longitudinal, la face arrière du porte-plaquette 27a étant simplement plane. Dans ce cas, les trous destinés à recevoir les vis 28 sont cylindriques. Le porte-plaquette 27a est alors fixé rigidement sans possibilité de réglage de la position. Une telle solution peut être appliquée dans les machines disposant de commande électronique qui prennent en compte les corrections de la position des outils.

Quel que soit le type d'outil utilisé, l'ensemble formé d'un support et d'un ou plusieurs outils qui y sont fixés, peut être préparé et étalonné avant la mise en place sur la machine. De la sorte, le temps nécessaire aux réglages est considérablement réduit.

Dans les exemples décrits, les outils sont essentiellement des burins. Il est bien évident que d'autres types d'outils peuvent être utilisés sur de tels supports. Il est ainsi possible de fixer un dispositif moteur pouvant assurer l'entraînement de mèches de perçage ou des fraises.

Dans les exemples donnés, tous les porte-plaquette occupent trois pas sur le support. Il va de soi que des outils pourraient occuper un nombre de pas différents, en fonction de leurs dimensions et de la rigidité attendue.

Ainsi, grâce à la structure particulière que présentent le support et l'outil qui y est fixé, il est possible de réaliser un ensemble rigide et précis, dans un encombrement minimum, sans pour autant affecter le coût de l'ensemble.

## Revendications

1. Ensemble destiné à équiper une machine-outil et comportant :
- un support (10) muni d'une surface d'appui (20) comportant des rainures longitudinales (25),
- au moins un outil (27) destiné à être fixé rigidement sur ledit support (10) et qui présente un corps de forme générale parallélépipédique oblongue définissant un axe AA longitudinal, dont une première extrémité est destinée à assurer une fonction de porte-plaquette ou d'outil et dont un côté comprend des bossages longitudinaux (27d) conformés de manière à pouvoir être engagés dans lesdites rainures (25),
- des moyens de fixation agencés pour assurer le maintien rigide de l'outil (27) sur le support (10),
**caractérisé en ce que** ledit support (10) présente une gorge (24) définie par un rehaut (23) perpendiculaire à l'axe AA et par une paroi que comporte le support (10), ledit rehaut (23) étant destiné à coopérer avec une deuxième extrémité de l'outil pour assurer son positionnement, ladite deuxième extrémité de l'outil étant constituée par une vis (29) disposée dans un taraudage d'axe AA, ladite vis comportant une tête (29a) agencée pour coopérer avec ledit rehaut (23).

2. Ensemble selon la revendication 1, **caractérisé en ce que** ledit support (10) présente une gorge (24) définie par ledit rehaut (23) et par une paroi que comporte le support (10), la tête de la vis étant disposée dans ladite gorge, et **en ce que** ladite paroi (24) comporte une bille à ressort (30) agencée pour appuyer ladite tête (29a) de la vis contre le rehaut (23).

3. Ensemble selon l'une des revendications précédentes, **caractérisé en ce que** les rainures (25) et les bossages (27d) sont de section triangulaire ou trapézoïdale, présentant un angle au sommet compris entre 60° et 120°.

4. Ensemble selon l'une des revendications précédentes, **caractérisé en ce que** ledit outil (27) est muni de deux trous (27c) le traversant de part en part et débouchant dans son côté coopérant avec ladite surface d'appui (20) et **en ce que** ledit support (10) comprend deux trous (26) taraudés débouchant dans sa surface d'appui (20), lesdits moyens de fixation comportant deux vis (28) engagées dans les trous (27c) de l'outil et vissées dans les trous (26) du support (10).

5. Ensemble selon la revendication 4, **caractérisé en ce que** les trous (27c) que comporte ledit outil (27) sont oblongs et orientés selon l'axe AA.

## Claims

1. An assembly for equipping a machine tool, comprising:
- a bracket (10) provided with a bearing surface (20) having longitudinal slots (25),
- at least one tool (27) intended to be solidly fastened to said bracket (10) and having a body of a generally elongated parallelepipedic shape defining a longitudinal axis AA, a first end of which is designed for acting as a plate or tool holder and one side of which comprises longitudinal bosses (27d) shaped so that they can be engaged into said slots (25),
- fastening means arranged for ensuring that the tool (27) is solidly held on the bracket (10),
**characterized in that** said bracket (10) has a groove (24) defined by a collar (23) perpendicular to axis AA and by a wall comprised by the bracket (10), said collar (23) being intended to cooperate with a second end of the tool in order to ensure positioning thereof, said second end of the tool being composed of a screw (29) disposed in a female thread of axis AA, said screw comprising a head (29a) arranged for cooperating with said collar (23).

2. The assembly according to claim 1, **characterized in that** said bracket (10) has a slot (24) defined by said collar (23) and by a wall comprised by the bracket (10), the head of the screw being disposed within said groove, and **in that** said wall (24) comprises a spring-loaded ball (30) arranged for pushing said head (29a) of the screw against the collar (23).

3. The assembly according to any of the preceding claims, **characterized in that** the slots (25) and the bosses (27d) have a triangular or trapezoid cross-section, having an apex angle comprised between 60° and 120°.

4. The assembly according to any of the preceding claims, **characterized in that** said tool (27) is equipped with two holes (27c) going straight therethrough and opening into the side thereof cooperating with said bearing surface (20), and **in that** said bracket (10) comprises two tapped holes (26) opening into the bearing surface (20) thereof, said fastening means comprising two screws (28) engaged in the holes (27c) of the tool and screwed into the holes (26) of the bracket (10).

5. The assembly according to claim 4, **characterized in that** the holes (27c) comprised by said tool (27) are elongated and oriented according to the axis AA.

## Patentansprüche

1. Anordnung zum Ausstatten einer Werkzeugmaschine, umfassend:
- einen Träger (10), der mit einer Auflagefläche (20) versehen ist, die längsseitige Nuten (25) umfasst,
- mindestens ein Werkzeug (27) das dazu ausersehen ist, starr auf dem Träger (10) befestigt zu werden und das einen im Allgemeinen länglich quaderförmig gestalteten Körper aufweist, der eine Längsachse AA definiert, dessen erstes Ende dazu gedacht ist, eine Funktion als Platten- bzw. Werkzeughalter zu erfüllen, und dessen eine Seite Längserhebungen (27d) umfasst, die derart ausgeformt sind, dass sie in die Nuten (25) in Eingriff gebracht werden können,
- Befestigungsmittel, die angeordnet sind, um den starren Halt des Werkzeugs (27) auf dem Träger (10) sicherzustellen,
**dadurch gekennzeichnet, dass** der Träger (10) eine Auskehlung (24) aufweist, die von einer Erhöhung (23), die zur Achse AA rechtwinklig ist, und von einer Wand, die der Träger (10) umfasst, definiert wird, wobei die Erhöhung (23) dazu ausersehen ist, mit einem zweiten Ende des Werkzeugs zusammenzuwirken, um seine Positionierung sicherzustellen, wobei das zweite Ende des Werkzeugs aus einer Schraube (29) besteht, die in einem Innengewinde der Achse AA angeordnet ist, wobei die Schraube einen Kopf (29a) umfasst, der angeordnet ist, um mit der Erhöhung (23) zusammenzuwirken.

2. Anordnung nach Anspruch 1, **dadurch gekennzeichnet, dass** der Träger (10) eine Auskehlung (24) aufweist, die von der Erhöhung (23) und von einer Wand, die der Träger (10) umfasst, definiert wird, wobei der Kopf der Schraube in der Auskehlung angeordnet ist, und dass die Wand (24) eine Federkugel (30) umfasst, die angeordnet ist, um den Kopf (29a) der Schraube gegen die Erhöhung (23) zu drücken.

3. Anordnung nach einem der vorhergehenden Ansprüche, **dadurch gekennzeichnet, dass** die Nuten (25) und die Erhebungen (27d) im Querschnitt dreieckig oder trapezförmig sind, wobei sie einen Spitzenwinkel zwischen 60° und 120° aufweisen.

4. Anordnung nach einem der vorhergehenden Ansprüche, **dadurch gekennzeichnet, dass** das Werkzeug (27) mit zwei Löchern (27c) versehen ist, die es ganz durchqueren und in seiner Seite ausmünden, die mit der Auflagefläche (20) zusammenwirkt, und dass der Träger (10) zwei Löcher (26) mit Innengewinden umfasst, die in seiner Auflagefläche (20) ausmünden, wobei die Befestigungsmittel zwei Schrauben (28) umfassen, die in die Löcher (27c) des Werkzeugs in Eingriff gebracht und in die Löcher (26) des Trägers (10) eingeschraubt werden.

5. Anordnung nach Anspruch 4, **dadurch gekennzeichnet, dass** die Löcher (27c), die das Werkzeug (27) umfasst, länglich und gemäß der Achse AA ausgerichtet sind.
